Europäisches Patentamt

European Patent Office

Office européen des brevets

(19)

(11) Publication number: **0 134 062**
**B1**

(12) EUROPEAN PATENT SPECIFICATION

(45) Date of publication of patent specification: **23.09.87**

(51) Int. Cl.⁴: **F 16 L 29/00,** F 17 C 13/04

(21) Application number: **84201199.1**

(22) Date of filing: **17.08.84**

(54) Valve for vessel containing a pressurized gas, in particular liquefied petroleum gas, a conical pre-sealing ring for said vessel, and a cylinder comprising such a valve.

(30) Priority: **24.08.83 FR 8313674**

(43) Date of publication of application:
**13.03.85 Bulletin 85/11**

(45) Publication of the grant of the patent:
**23.09.87 Bulletin 87/39**

(84) Designated Contracting States:
**DE GB IT SE**

(56) References cited:
**DE-A-2 553 043**
**FR-A-2 318 377**
**GB-A- 910 429**

(73) Proprietor: **SHELL INTERNATIONALE**
**RESEARCH MAATSCHAPPIJ B.V.**
**Carel van Bylandtlaan 30**
**NL-2596 HR Den Haag (NL)**

(72) Inventor: **Beaudouin, Jean-Claude Joseph**
**Julien**
**4, rue Adolphe Marie La londe**
**F-76250 Elboeuf (FR)**

(74) Representative: **Aalbers, Onno et al**
**P.O. Box 302**
**NL-2501 CH The Hague (NL)**

Courier Press, Leamington Spa, England.

## Description

The present invention relates to a valve for a vessel containing a pressurized gas, in particular liquefied petroleum gas, a conical pre-sealing ring for said vessel, and a cylinder comprising such a valve.

More exactly, the valve is of a type intended for being coupled in a gas-tight manner to the lower part of an appliance provided with a push-element having a passage for a pressurized gas, the valve comprising within a body a bore with a shoulder for receiving said lower part, a conically-shaped pre-sealing ring having its apex facing the lower part of the appliance and capable of being deformed with reversal by the penetration of said lower part, thereby pressing its inner surface against said shoulder, a seat with sealing ring, a valve element resting elastically against the seat and intended to be moved by the push-element, and means, cooperating with the lower part of the appliance, for coupling said lower part and engaging it in the bore.

Reference is made to the drawings, wherein:

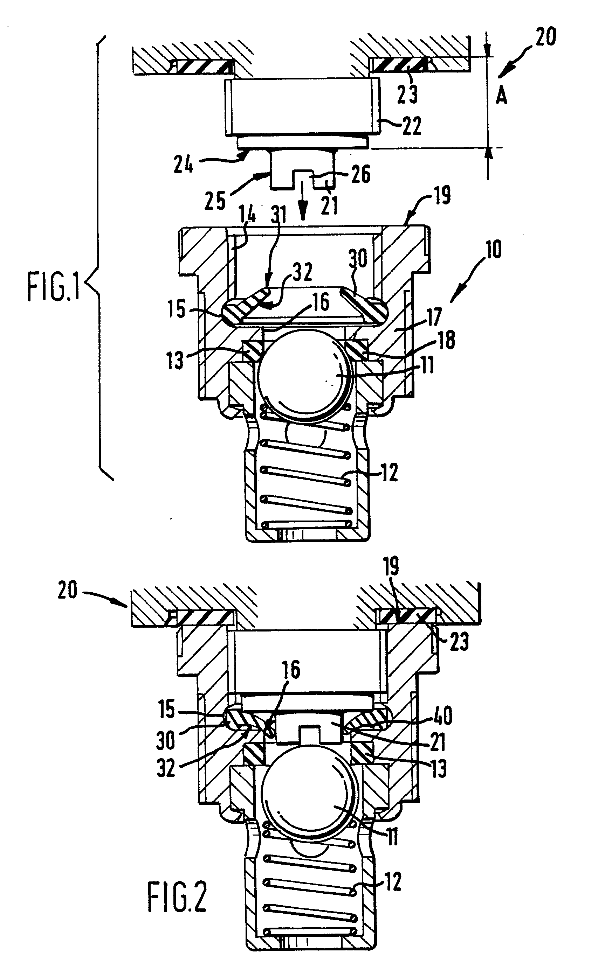

Figs 1 and 2 show a valve/appliance provided with a conical pre-sealing ring of the prior art.

The appliance/cylinder assembly for which a known valve or sealing ring is intended is illustrated in Fig. 1, which shows a valve 10 of a cylinder for containing pressurized gas and the lower part of an appliance, for example a tap nozzle 20 which can be screwed into the valve 10, the screwing action causing the valve element of this valve to open (Fig. 1 shows the two elements 10 and 20 before coupling).

The valve 10 comprises a valve element consisting of a steel ball 11 held by a spring 12 in gas-tight contact with a sealing ring 13 having a square or rectangular diametrical cross-section, resting on a seat 18. In addition, there is a threaded bore 14 into which the tap nozzle 20 can be screwed.

The tap nozzle 20 comprises a push-element 21 with a passage 26 for the pressurized gas, the push-element 21 coming into contact with the ball 11 when the thread 22 is engaged in the mating thread of the threaded bore 14 of the valve 10, and a flat sealing ring 23 which ensures the gas-tightness of the tap/valve connection when screwing the tap nozzle 20 into the bore 14 has been completed.

The valve shown in Fig. 1 also comprises a conventional conical pre-sealing ring 30 of the type to which the invention relates.

This pre-sealing ring 30, whose conical cross-section has its apex 31 facing the push-element 21 of the tap nozzle 20, can press against push-element 21 so as to achieve a temporary sealing or pre-sealing while the tap nozzle 20 is being screwed or unscrewed, i.e. while the relative position of the valve 10 and the tap nozzle 20 is such that there is no longer gas-tight contact with the sealing ring 13 (ball slightly depressed), nor gas-tight contact with the flat sealing ring 23 (screwing incomplete).

The following steps take place during the screwing of the tap nozzle 20 into the valve 10:

—bringing the flat face 24 of the tap nozzle 20 in contact with the apex 31 of the conical pre-sealing ring 30;

—causing the push-element 21 to act on the ball 11 to open the valve, whereby pressure builds up on the inner surface 32 of the conical pre-sealing ring 30 and presses it against the body 17 of the valve 10 (at the bottom of the groove 15 in which it is located) and against the flat face 24 of the tap nozzle 20, then (as deformation increases) against the cylindrical surface 25 of the push-element 21, thereby ensuring pre-sealing; and

—finally, to provide sealing when screwing is complete, compressing the flat sealing ring 23 against the top surface 19 of the valve 10.

During removal, the preceding steps take place in the reverse order:

—freeing of the flat sealing ring 23, the temporary sealing being again provided by the conical pre-sealing ring 30;

—allowing the ball 11 to return its initial position and closure of the valve 10; and

—causing the flat face 24 of the tap 20 to separate from the apex 31 of the conical pre-sealing ring 30, whereby the gas contained in the enclosed space defined by the ball 11, the conical pre-sealing ring 30 and the flat face 24 of the tap nozzle 20 escapes.

It should be pointed out that, according to the above, the sealing of the conical pre-sealing ring 30 results from the gas pressure acting on its inner surface 32.

After each new filling, a given cylinder, and therefore a given valve, will be used by a different user, and therefore with a different appliance. The dimension A (Fig. 1), which mainly determines the penetration of the push-element 21 of the tap nozzle 20 into the valve 10, is in principle constant from one appliance to another, but there may be variations due to manufacturing tolerances.

It has been observed in particular that tap nozzles 20 having a dimension A larger than the nominal dimension can cause a reversal of the conical pre-sealing ring 30 at the end of the screwing, as shown in Fig. 2. Such a reversal renders the conical pre-sealing ring 30 inoperative during unscrewing, since it cannot return unaided to its original conical state.

In fact, if dimension A is too large, the inner surface 32 of the conical pre-sealing ring 30 will be stuck against the edge of the valve shoulder 16. In this case, even the smallest leak at the external edge of the conical pre-sealing ring 30 (for example at the bottom of the groove 15) will cause decompression of the volume 40. On unscrewing the tap nozzle 20 the conical pre-sealing ring 30 will remain in its reversed position, since its inner surface 32 is subjected to the ambient pressure. The conical pre-sealing ring 30 therefore remains pressed against the shoulder 16 by the pressure on its other surface.

This can result in a leak during the whole transitory period during which the valve element remains partly open: the push-element 21 is no longer in complete contact with the conical pre-sealing ring 30, and the ball 11 has not yet come into contact with the sealing ring 13. The conical pre-sealing ring 30 can therefore remain permanently reversed so it is no longer able to provide the temporary seal during a subsequent screwing-in of the tap nozzle 20.

In extreme circumstances, in which the previously-mentioned appliances penetrate too deeply into the valve, and with the aim of improving the security of the valves described above, it is an object of the invention to provide a means of preventing the reversal of the conical pre-sealing ring.

To this end the valve according to the present invention comprises within a body, a bore with a shoulder for receiving the lower part of an appliance, a conically-shaped pre-sealing ring having its apex facing the lower part of the appliance and capable of being deformed with reversal by the penetration of said lower part, thereby pressing its inner surface against said shoulder, a seat with sealing ring, a valve element resting elastically against the seat and intended to be moved by the push-element, and means, in cooperation with the lower part of the appliance, for coupling said lower part and engaging it in the bore, characterised in that the pre-sealing ring comprises, on its inner conical surface, at least one radial protuberance adapted to prevent gas-tight contact between the inner, possibly reversed, surface of the sealing ring and the edge of the valve shoulder, and to enable the gas pressure to act permanently on this inner surface when the valve element is depressed by the lower part of the appliance.

The invention further relates to a cylinder for holding a pressurized gas, the cylinder comprising a valve according to the invention.

The invention moreover relates to a conical pre-sealing ring intended for providing pre-sealing between a valve and a lower part of an appliance able to be coupled in a gas-tight manner to the valve, wherein the sealing ring comprises at least one radial protuberance on its inner conical surface.

The pre-sealing ring according to the invention will, solely by the action of the gas pressure, return to its original position when the appliance is removed. It is pointed out that this return to the original position is purely the result of a pneumatic effect, the protuberances having no significant mechanical stiffening effect on the conical pre-sealing ring.

Preferably, the pre-sealing ring comprises a plurality of radial protuberances and these protuberances are arranged in a regular angular distribution.

Further characteristics and advantages of the invention will become evident from reading the detailed description below, given with reference to the drawings, wherein:

Fig. 3 is a bottom view of the pre-sealing ring according to the invention, viewed from line III—III of Fig. 4;

Fig. 4 is a transversal cross-section along line IV—IV of Fig. 3; and

Fig. 5 is homologous with Fig. 2, but for a conical pre-sealing ring according to the invention.

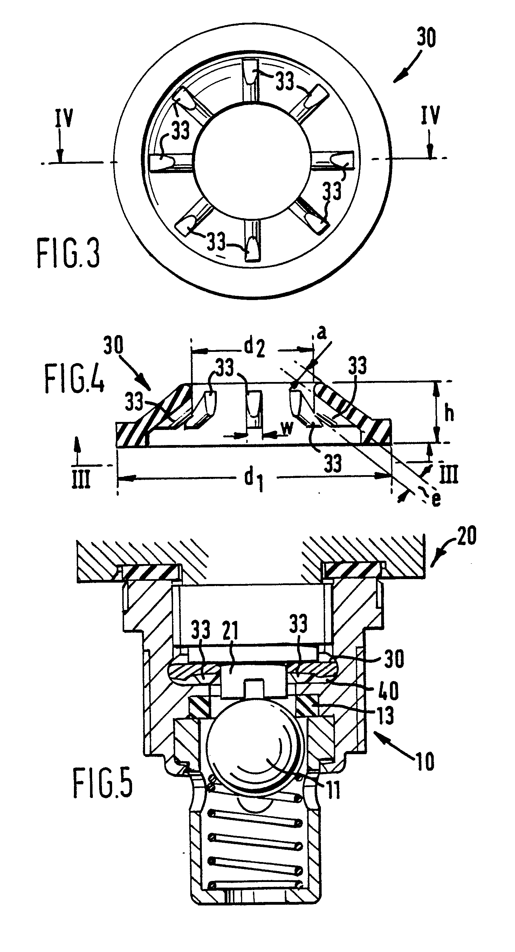

Fig. 3 is a bottom view of the pre-sealing ring 30 according to the invention, showing the radial protuberances 33.

It has been found by experiment that the presence of eight radial protuberances 33 arranged regularly at 45° ensures the return of the conical pre-sealing ring 30 to its original position, whatever the depth of penetration of the push-element 21, even for very large dimensions A (Fig. 1).

A standard conical pre-sealing ring 30 has approximately the following dimensions (see Fig. 4): external diameter $d_1 = 17$ mm; internal diameter $d_2 = 7.5$ mm; thickness of the conical part a=1.1 mm and overall height h=4 mm.

Given these dimensions, protuberances 33 having a thickness e=1 mm and a width w=1.3 mm. enable the desired effect to be obtained without an appreciable change in the mechanical properties of the conical pre-sealing ring compared with a conical pre-sealing ring of the prior art.

The conical pre-sealing ring 30 may be made of an elastomeric material such as an NBR (nitrile butadiene rubber), or such as epichlorohydrin or polyurethane. These various materials offer a high chemical resistance to normal liquefied petroleum gas, a low permanent deformation after compression, and a high resistance to ageing under the influence of air or heat.

Fig. 5 is homologous with Fig. 2, but for a conical pre-sealing ring 30 according to the invention: it can be clearly seen that the space 40 is always in communication, thanks to the radial protuberances 33, with the gas pressure surrounding the push-element 21 and the valve element. It is this communication which ensures the return of the conical pre-sealing ring 30 to its original position, even after deep penetration of the push-element 21.

## Claims

1. Valve intended for being coupled in a gas-tight manner to the lower part of an appliance provided with a push-element (21) having a passage for a pressurized gas, the valve comprising within a body, a bore (14) with a shoulder (16) for receiving said lower part, a conically-shaped pre-sealing ring (30) having its apex foacing the lower part of the appliance and capable of being deformed with reversal by the penetration of said lower part, thereby pressing its inner surface (32) against said shoulder, a seat with a sealing ring (13), a valve element (11) resting elastically against the seat and intended to be moved by the push-element, and means, in cooperation with the lower part of the appliance, for coupling said lower part and engaging it in the bore, characterised in that the pre-sealing ring (30) comprises, on its inner conical surface, at least one radial protuberance (33) adapted to prevent gas-tight contact between the inner, possibly reversed, surface of the sealing ring and the edge of the valve shoulder, and to enable the gas pressure to act permanently on this inner surface when the valve element is depressed by the lower part of the appliance.

2. Valve according to claim 1, wherein the conical pre-sealing ring comprises a plurality of radical protuberances (33), these protuberances being arranged in a regular angular distribution.

3. Valve according to claim 1, wherein the conical pre-sealing ring comprises eight radial protuberances arranged regularly at 45°.

4. Cylinder for holding a pressurized gas, the cylinder comprising a valve according to one of claims 1 to 3.

5. Conical pre-sealing ring intended for providing pre-sealing between a valve and lower part of an appliance able to be coupled in a gas-tight manner to the valve, characterised in that the sealing ring comprises at least one radial protuberance on its inner conical surface.

6. Conical pre-sealing ring according to claim 5, wherein it comprises a plurality of radial protuberances, these protuberances being arranged in a regular angular distribution.

7. Conical pre-sealing ring according to claim 6, wherein it comprises eight radial protuberances arranged regularly at 45°.

**Patentansprüche**

1. Ventil für gasdichte Verbindung mit dem unteren Teil einer Vorrichtung oder eines Gerätes, die bzw. das mit einem Drückelement (21) versehen ist, welches einen Durchgang für ein Druckgas hat, wobei das Ventil in einem Körper eine Bohrung (14) mit einer Schulter (16) zum Aufnehmen des genannten unteren Teiles, einen konischen Vordichtungsring (30), dessen Spitze dem unteren Teil der Vorrichtung oder des Gerätes zugewandt und in der Lage ist, unter Umkehr verformt zu werden durch das Eindringen des genannten unteren Teiles, wodurch seine innere Fläche (32) gegen die genannte Schulter gedrückt wird, einen Sitz mit einem Dichtungsring (13), ein Ventilelement (11), welches elastisch an dem Sitz anliegt und durch das Drückelement bewegt werden soll, und Mittel aufweist, die mit dem unteren Teil der Vorrichtung oder des Gerätes zusammenarbeiten, un den genannten unteren Teil anzuschließen und ihn in Eingriff in der Bohrung zu bringen, dadurch gekennzeichnet, daß der Vordichtungsring (30) an seiner inneren konischen Fläche wenigstens einen radialen Vorsprung (33) aufweist, der gasdichte Berührung zwischen der inneren, möglicherweise umgekehrten, Fläche des Dichtungsringes und der Kante der Ventilschulter verhindern Kann und der ermöglicht, daß der Gasdruck permanent auf diese innere Fläche wirkt, wenn das Ventilelement durch den unteren Teil der Vorrichtung oder des Gerätes niedergedrückt ist.

2. Ventil nach Anspruch 1, wobei der konische Vordichtungsring eine Mehrzahl von radialen Vorsprüngen (33) aufweist, die in einer regelmäßigen Winkelverteilung angeordnet sind.

3. Ventil nach Anspruch 1, wobei der konische Vordichtungsring acht radiale Vorsprünge aufweist, die in regelmäßigen Abständen von 45° angeordnet sind.

4. Zylinder zum Halten eines Druckgases, wobei der Zylinder ein Ventil gemäß einem der Ansprüche 1 bis 3 aufweist.

5. Konischer Vordichtungsring zum Schaffen einer Vordichtung zwischen einem Ventil und einem unteren Teil einer Vorrichtung oder eines Gerätes, welche bzw. welches mit dem Ventil gasdicht verbunden werden kann, dadurch gekennzeichnet, daß der Dichtungsring wenigstens einen radialen Vorsprung an seiner inneren konischen Fläche aufweist.

6. Konischer Vordichtungsring nach Anspruch 5, wobei er eine Mehrzahl von radialen Vorsprüngen aufweist, die in einer regelmäßigen Winkelverteilung angeordnet sind.

7. Konischer Vordichtungsring nach Anspruch 6, wobei er acht radiale Vorsprünge aufweist, die in regelmäßigen Abständen von 45° angeordnet sind.

**Revendications**

1. Robinet à soupape prévu pour être couplé, de façon étanche au gaz, à la partie inférieure d'un appareil pourvu d'un élément-poussoir (21) présentant un passage pour un gaz sous pression, le robinet à soupape comportant, à l'intérieur d'un corps, un alésage (14) avec un épaulement (16) pour recevoir ladite partie inférieure, une bague de pré-étanchéité (30) de forme conique dont le sommet fait face à la partie inférieure de l'appareil et qui peut se déformer, avec inversion de forme, lors de la pénétration de ladite partie inférieure, pressant alors sa surface intérieure (32) contre ledit épaulement, un siège avec une bague d'étanchéité (13), une soupape (11) reposant élastiquement contre le siège et prévue pour être déplacée par l'élément-poussoir et des moyens en coopération avec la partie inférieure de l'appareil, pour coupler ladite partie inférieure et la faire pénétrer dans l'alésage, en contact avec cet alésage, caractérisé en ce que la bague de pré-étanchéité (30) comporte, sur sa surface conique intérieure, au moins une protubérance radiale (33) prévue pour empêcher un contact étanche au gaz entre la surface intérieure, à forme éventuellement inversée, de la bague d'étanchéité et le bord de l'épaulement du robinet à soupape, et pour permettre à la pression du gaz de s'exercer en permanence sur cette surface intérieure lorsque la soupape est enfoncée par la partie inférieure de l'appareil.

2. Robinet à soupape selon la revendication 1, dans lequel la bague de pré-étanchéité conique comporte une pluralité de protubérances radiales (33), ces protubérances étant disposées selon une distribution angulaire régulière.

3. Robinet à soupape selon la revendication 1, dans lequel la bague de pré-étanchéité conique comporte huit protubérances radiales disposées régulièrement à 45°.

4. Bouteille pour contenir un gaz sous pression, la bouteille comportant un robinet à soupape selon l'une des revendication 1 à 3.

5. Bague de pré-étanchéité conique prévue pour assurer une pré-étanchéité entre un robinet à soupape et une partie inférieure d'un appareil qui peut être couplé, avec étanchéité au gaz, au robinet à soupape, caractérisée en ce que la bague d'étanchéité comporte au moins une protubérance radiale sur sa surface conique intérieure.

6. Bague de pré-étanchéité conique selon la revendication 5, caractérisée en ce qu'elle comporte une pluralité de protubérances radiales, ces protubérances étant disposées selon une distribution angulaire régulière.

7. Bague de pré-étanchéité conique selon la revendication 6, caractérisée en ce qu'elle comporte huit protubérances radiales disposées régulièrement à 45°.

0 134 062

FIG.1

FIG.2

FIG.3

FIG.4

FIG.5